(19) Europäisches Patentamt
European Patent Office
Office européen des brevets

(11) **EP 1 150 933 B1**

(12) **EUROPEAN PATENT SPECIFICATION**

(45) Date of publication and mention
of the grant of the patent:
**03.12.2003 Bulletin 2003/49**

(21) Application number: **99962801.9**

(22) Date of filing: **19.11.1999**

(51) Int Cl.[7]: **C04B 41/49**

(86) International application number:
**PCT/US99/27459**

(87) International publication number:
**WO 00/034206 (15.06.2000 Gazette 2000/24)**

(54) **STABLE, CONSTANT PARTICLE SIZE, AQUEOUS EMULSIONS OF NONPOLAR SILANES SUITABLE FOR USE IN WATER REPELLENCE APPLICATIONS**

STABILE EMULSION VON UNPOLAREN SILANE MIT KONSTANTER PARTIKELGRÖSSE GEEIGNET FÜR WASSERABWEISENDE VERWENDUNGEN

EMULSIONS AQUEUSES STABLES, A DIMENSION PARTICULAIRE CONSTANTE, DE SILANES NON POLAIRES, UTILES DANS DES APPLICATIONS A CARACTERISTIQUE HYDROFUGE

(84) Designated Contracting States:
**AT BE CH CY DE DK ES FI FR GB GR IE IT LI LU MC NL PT SE**

(30) Priority: **10.12.1998 US 209521**
**01.06.1999 US 323325**

(43) Date of publication of application:
**07.11.2001 Bulletin 2001/45**

(73) Proprietor: **DOW CORNING CORPORATION**
**Auburn, MI 48611 (US)**

(72) Inventors:
• **FISHER, Paul, D.**
**Midland, MI 48642 (US)**
• **GEE, Ronald, P.**
**Midland, MI 48640 (US)**

(74) Representative: **Kyle, Diana**
**Elkington and Fife**
**Prospect House**
**8 Pembroke Road**
**Sevenoaks, Kent TN13 1XR (GB)**

(56) References cited:
EP-A- 0 412 516        US-A- 4 889 747
US-A- 5 531 812        US-A- 5 695 551

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

### FIELD OF THE INVENTION

This invention relates to aqueous silane emulsions that can be used in water repellence applications. More particularly, this invention relates to aqueous silane emulsions that do not phase separate with age and that have an average particle size that does not increase significantly with age.

### BACKGROUND OF THE INVENTION

Organosilane and organosilicone compounds dissolved in organic solvents have been used to render masonry and other substrates water repellent in the past. For example. U.S. Patent 3,772,065 to Seiler discloses a method for waterproofing masonry structures. The method comprises impregnating masonry structures with an alcoholic or hydrocarbon solution of hydrolyzed alkyltrialkoxysilanes and their lower oligomers. European Patent 0 075 962 to Pühringer discloses an impregnating agent for porous building materials containing tetraalkoxysilanes, alkyltrialkoxysilanes, or aryltrialkoxysilanes, a surfactant, an aliphatic solvent, and an optional condensation reaction catalyst. U.S. Patent 4,937,104 to Pühringer discloses a process for imparting hydrophobicity to mineral substrates. The process comprises mixing at least one silane, a hydrolysis product of the silane, a condensation product, or combinations thereof, with a surfactant and a water/ organic alcohol mixture. The resulting emulsion is applied to a mineral substrate. However, organic solvents such as alcohols and hydrocarbons are flammable, expensive, and have detrimental environmental and physiological effects.

U.S. Patent No. RE 33,759 to DePasquale et al. discloses an aqueous emulsion containing silanes for rendering masonry surfaces water repellent. The system consists essentially of a hydrolyzable silane, and oligomers thereof; a surfactant having hydrophilic-lipophilic balance (HLB) of 4 to 15; and water. The hydrolyzable silane has the formula $R_nSiR'_{(4-n)}$ where n is 1 or 2, R is independently selected from hydrocarbon and halogenated hydrocarbon groups of 1 to 20 carbon atoms, and R' is selected from alkoxy groups of 1 to 3 carbon atoms, halide groups, amino groups, and carboxyl groups. The surfactant can be nonionic, amphoteric, ionic, or combinations thereof. The preferred surfactants are SPAN® surfactants, which have HLB values in the range of 4.3 to 8.6, and TWEEN® 61 and TWEEN® 81, which have HLB values of 9.6 and 10.0, respectively. However, pH and particle size of the emulsion are not disclosed. Particle size change with time is not disclosed.

U.S. Patent No's. 4,877,654 and 4,990,377, both to Wilson et al., disclose aqueous emulsions for rendering porous substrates water repellent. The emulsion comprises a hydrolyzable silane, an emulsifier with HLB of 1.5 to 20, a buffer, and water. The silane has formula $R_nSiR'_{4-n}$, where R is independently selected from hydrocarbon- and halogenated hydrocarbon groups of 1 to 30 carbon atoms; n is 1 or 2, and R' is an alkoxy group of 1 to 6 carbon atoms, a halide group, an amino group, or a carboxyl group. Nonionic, cationic, anionic, and amphoteric emulsifiers are suitable. The emulsion has a pH of 6-8. However, stability and particle size of the emulsion are not disclosed. Particle size change with time of the emulsion is not disclosed.

U.S. Patent No. 5,226,954 to Suzuki, discloses an organosilicon composition comprising a monoalkyltrialkoxysilane and/or a condensate thereof, an emulsifier mixture of an anionic emulsifier and a nonionic emulsifier, and water. The composition undergoes emulsification to form an emulsion. 'Emulsification' as defined therein is achieved when the alkylalkoxysilane and the emulsifier are mixed and form an upper layer that is opaque and further where a small amount of water separates to form a lower layer that is more transparent than the upper layer. Suzuki '954 does not disclose particle size of the emulsion. Suzuki '954 does not disclose particle size increase over time.

U.S. Patent No. 5,746,810 to Suzuki discloses an aqueous emulsion of an alkylalkoxysilane, a surfactant, and water. Suzuki '810 discloses that the emulsion is stable and has particle diameter in the range of 2 to 10 micrometers. Suzuki '810 defines 'stable' to mean that after storage, some separation into an opaque layer of silane concentrated emulsion and a colorless transparent layer of water is acceptable when the material can easily be reemulsified. The emulsion has a pH of 7.5-9.

United Kingdom Publication GB 2 301 102 A to Toagosei Co., Ltd., discloses an aqueous emulsion prepared by hydrolyzing a silane selected from the group consisting of alkoxysilanes and alkylhalogensilanes by heating in the presence of an acid catalyst and a small amount of water to form a mixture of the silane and its oligomer, and subsequently emulsifying the mixture with water and an emulsifier. The alkoxysilane has the formula $R_nSiR'_{4-n}$, where R is independently selected from alkyl groups, substituted alkyl groups, and aryl groups; n is 1 or 2, and R' is an alkoxy group of 1 to 6 carbon atoms. The emulsifier can be nonionic, anionic, or cationic. The particle size of the emulsion is 1 micrometer or smaller. Emulsions prepared according to Toagosei with panicle size larger than 1 micrometer tend to be unstable and liable to phase separation.

U.S. Patent No. 5,458,923 and U.S. Patent No. 5,314,533, both to Goebel et al., disclose aqueous emulsions of organosilicon compounds. The emulsion comprise an alkoxysilane, an ionic surfactant, an organosilicon surfactant, and water. The emulsion is stable for weeks at pH 6 to 9. 'Stable' is defined as 1, an emulsion having no phase separation and no formation of a layer of cream, or 2, if formation of a layer of cream does occur, the emulsion can be obtained by simple stirring with no loss of effects.

However, none of these patents address the problem of particle size increase with time. This is generally due to a process known as Ostwald Ripening in which the low molecular weight emulsified silane compound has a sufficient solubility in water such that it diffuses from smaller particles through the aqueous phase into larger particles. This results in a net increase in average particle size of the emulsion with time. This can lead to inconsistent behavior or performance of the emulsion in commercial use due to changing properties of the emulsion with age.

Additionally, when an alkoxysilane is used as the silane compound in the emulsion, over time the alkoxysilane can react when it contacts the water phage. The alkoxysilane can undergo hydrolysis and condensation, thereby forming a siloxane and liberating alcohol, which can break the emulsion.

US 5,531,812 discloses water-proofing agents for mineral building materials based on an aqueous emulsion of dispersed organosilanes, organosiloxane resins, or both. The disperse phase has an average particle size of about 0.3 to 1.1 μm and a particle size range of less than about 1.3.

US 5,695,551 discloses an emulsified water-repellent composition suitable for treating cellulosic or masonry surfaces. The composition contains an alkoxysilane of the general formula $R_nSi(OR')_{4-n}$ where R is $C_{1-10}$ alkyl, $C_{2-8}$ alkenyl, phenyl, chloropropyl or trifluoropropyl, R' is $C_{1-6}$ alkyl and n is 1 or 2, together with at least two surfactants one surfactant having a HLB less than 10.5 and the other surfactant having a HLB more than 15.0.

Therefore, an object of this invention is to provide a means to prevent, or minimize, increasing particle size with age; thereby providing the capability to produce stable emulsions of low molecular weight silanes. "Low molecular weight" means a molecular weight (MW) less than 1000.

Particles of increasing size will cream up more rapidly, in accordance with Stokes Law for the rate of creaming of particles in an emulsion. Conversely, if the particles are sufficiently small, the velocity of random particle movement due to Brownian Motion will be sufficient to prevent creaming. The use of additives in the silane compound phase or water phase to decrease the density difference between the silane compound and water to near zero is one technique to minimize creaming. However, this is often undesirable. as it adds to the manufacturing cost of an emulsion and may have detrimental effects on the use of the emulsion in some applications. To reduce creaming, one may also increase the viscosity of the aqueous phase with thickeners such as alginates, as disclosed in U.S. Patent No. 5,746,810, or with the use of large amounts of emulsifiers relative to the amount of interfacial surface area between the oil particles and the water phase. The use of such large amounts of emulsifier results in the formation of emulsifier structures such as liquid crystals on the particle surface and in the water phase which produces a viscous aqueous phase. Use of excessive amounts of emulsifiers is generally detrimental to the water repellency properties provided by silane emulsions.

Therefore, it is a further object of this invention to produce emulsions of silanes having sufficiently small particle size such that they do not exhibit significant creaming and remain essentially stable in silane concentration with age. To this end it is an object of this invention to provide emulsions having average particle size less than 10 micrometers.

An emulsion will not change in uniformity due to creaming if the emulsion is so concentrated in dispersed oil particles that it is already a cream from top to bottom of the container. The maximum packing of rigid spheres of the same diameter is 74% by volume. Accordingly in theory, as the concentration of silane phase in a polydisperse particle size emulsion approaches or exceeds this concentration, the emulsion becomes quite viscous and unlikely to exhibit non-uniformity due to creaming, as it is already essentially in a creamed state. Due to the viscous, paste-like nature of such emulsions, they are difficult to pump or handle in commercial use.

Therefore, it is a further object of this invention to provide stable silane emulsions with constant particle size that also have low viscosity for ease of handling. The emulsions of this invention have silane concentrations of approximately 65% or less by weight and are easily handled such as by pouring or pumping due to their low viscosity.

## SUMMARY OF THE INVENTION

This invention relates to an aqueous silane emulsion and a method for its preparation. The emulsion comprises:

A) a continuous phase comprising water;
B) a discontinuous phase comprising at least 1 nonpolar alkoxysilane having at least one nonpolar organofunctional group bonded to the silicon atom, wherein the discontinuous phase forms particles dispersed in the continuous phase; and
C) an emulsifier system consisting essentially of

(i) a primary surfactant, wherein the primary surfactant is a nonionic emulsifier having an HLB greater than 13, and wherein the primary surfactant is present in the emulsion at a concentration of 0.5 to 3 molecules per 100 square Angstrom of surface area of the particles;

(ii) a cosurfactant, wherein the cosurfactant is a nonionic emulsifier having an HLB less than 11, and wherein the cosurfactant is present in the emulsion at a concentration sufficient to provide 1.5 to 15 molecules per 100 square Angstroms of surface area of the particles; and wherein the nonpolar alkoxysilane contains an impurity in an amount of 2.50 weight percent or less.

The emulsion has improved stability in that the emulsion of alkoxysilanes exhibits no phase separation with age. The emulsion has uniformity in that the discontinuous phase exhibits no, or minimal, increase in particle size with age.

## DETAILED DESCRIPTION OF THE INVENTION

The aqueous silane emulsions of the present invention are stable and have constant particle size. "Stable" means that the emulsion does not phase separate into a water layer and a silane(oil) layer with age. "Constant" means that the particle size of the emulsion does not increase significantly with age. Preferably, particle size does not increase by more than 10% after the emulsion is stored at about 25°C for at least 14 days. These emulsions are easily handled such as by pouring or pumping due to their low viscosity. Typically, viscosity of the emulsion is not greater than about 5 sq mm/s. However, at silane concentrations greater than 50%, emulsion viscosity will be greater than 5, and may be as high as 1,000 sq mm/s. Emulsions with viscosity in the range of 5 to 1,000 sq mm/s are easily poured and pumped.

This invention relates to an aqueous silane emulsion comprising:

A) a continuous phase comprising water;

B) a discontinuous phase comprising at least 1 nonpolar alkoxysilane having at least one nonpolar organofunctional group bonded to the silicon atom, wherein the discontinuous phase forms particles dispersed in the continuous phase; and

C) an emulsifier system consisting essentially of

(i) a primary surfactant, wherein the primary surfactant is a nonionic emulsifier having an HLB greater than 13, and wherein the primary surfactant is present in the emulsion at a concentration of 0.5 to 3 molecules per 100 square Angstrom of surface area of the particles;

(ii) a cosurfactant, wherein the cosurfactant is a nonionic emulsifier having an HLB less than 11, and wherein the cosurfactant is present in the emulsion at a concentration sufficient to provide 1.5 to 15 molecules per 100 square Angstroms of surface area of the particles; and wherein the nonpolar alkoxysilane contains an impurity in an amount of 2,50 weight percent or less.

This emulsion has the advantage that even a low molecular weight nonpolar alkoxysilane can be emulsified to form a stable emulsion with constant particle size. However, it is not meant that this invention is limited to low molecular weight nonpolar alkoxysilanes. This emulsion can contain nonpolar alkoxysilanes having molecular weights greater than 1,000. 'Nonpolar alkoxysilane' means that at least one nonpolar organofunctional group is bonded to the silicon atom.

Typically, the amount of nonpolar alkoxysilane is 1 to 65 wt% of the emulsion. When the emulsion will be used in water repellence applications, the amount of nonpolar alkoxysilane is preferably from 10 to 60 wt%. However, more dilute emulsions (i.e., where the amount of nonpolar silane is from 5 to 10 wt%) are suitable for some applications.

Suitable nonpolar alkoxysilanes have the general formula $R_nSiR'_{4-n}$, where each R is independently selected from the group consisting of alkyl, halogenated alkyl, aryl, and substituted aryl groups, R' is an alkoxy group of 1 to 10 carbon atoms, and n is 1 or 2. R is preferably independently selected from the group consisting of alkyl and aryl groups, and R' is preferably an alkoxy group of 1 to 5 carbon atoms. However, when the emulsion will be used in water repellence applications, preferably R is independently an alkyl group of 8 to 20 carbon atoms and R' has 1 to 6 carbon atoms. However, alkyl groups R having 1 to 7 carbon atoms are also suitable for use in this emulsion.

Suitable alkytalkoxysilanes and halogenated alkylalkoxysilanes for component (B) are disclosed by U.S. Patent RE 33,759 to DePasquale et al.

Preferably, the alkylalkoxysilane is selected from the group consisting of isobutyltriethoxysilane, isobutyltrimethoxysilane, n-octyltriethoxysilane, and n-octyltrimethoxysilane. When the emulsion will be used in water repellence applications, the alkylalkoxysilane is preferably n-octyltriethoxysilane. Suitable halogenated alkylalkoxysilanes include 3,3,3-trifluropropyl trimethoxysilane and 6,6,6-trifluorohexyl trimethoxysilane.

However, this emulsion is advantageous over the emulsion disclosed by DePasquale et al. because high purity nonpolar alkoxysilanes can be emulsified to form stable emulsions having constant particle size. The high purity nonpolar alkoxysilanes typically contain about 5 wt% or less of impurities. Furthermore, nonpolar alkoxysilanes having impurity contents as low as 2.50 wt% or less, 0.63 wt% or less, and even 0.1 wt% or less can also be used to form an emulsion according to this invention.

"Impurity" means any dimer, trimer, or oligomer of the nonpolar alkoxysilane; and includes any other siloxane polymer or high molecular weight oil present in the silane.

The emulsion of this invention can be produced with a particle size less than 10 micrometers. Preferably, particle size is less than 1 micrometer, and more preferably, particle size is less than 0.5 micrometers.

The emulsifier system inhibits particle size increase with age. The emulsifier system comprises a primary surfactant and a cosurfactant. The primary surfactant prevents coalescence of the particles by steric repulsion between particles. The cosurfactant prevents diffusion of the silane out of the particle, which could result in Ostwald Ripening.

The amounts of each surfactant in the emulsifier system are sufficient to provide an outer mixed monolayer that contacts the water phase and a second inner monolayer of essentially water insoluble cosurfactant. The mixed monolayer is a combination of both surfactants. This surfactant bilayer provides a significant barrier to retard or prevent diffusion of the silane out of the particle. The emulsifier system imparts stability and constant particle size to the emulsion.

The primary surfactant is a nonionic surfactant having an HLB greater than about 13.0, preferably greater than 15.0. The concentration of primary surfactant in the emulsion is 0.5 to 3 molecules per 100 square Angstroms of surface area of the nonpolar alkoxysilane particles. However, for very dilute emulsions and with relatively large particle size where the concentration of primary surfactant becomes low by these constraints, it may be necessary to increase this amount by the critical micelle concentration (CMC) of the emulsifier to adjust for the amount that would be dissolved in the water phase.

Suitable nonionic primary surfactants are typically selected from the group consisting of ethoxylated octylphenols, ethoxylated fatty esters and oils, ethoxylated alcohols, and combinations thereof. Examples of suitable nonionic primary surfactants are as follows, with the HLB value in parentheses after the name of the surfactant.

Suitable nonionic primary surfactants having HLB greater than 13.0 are commercially available. For example surfactants that are solids at room temperature can be used, and they are exemplified by BRIJ® 700 (18.8), which is a polyoxyethylene stearyl ether available from ICI Americas Inc. of Wilmington, Delaware; MAPEG® S-40K (17.2), which is a polyoxyethylene monostearate available from PPG/ Mazer of Gurnee Illinois; MACOL® SA-40 (17.4), which is a steareth-40 available from PPG/ Mazer of Gurnee Illinois; MACOL® SA-20 (15.4) which is a steareth-20 available from PPG/ Mazer of Gurnee Illinois; and TERGITOL® 15-S-20 (16.3) which is a secondary alcohol ethoxylate having 11 to 15 carbon atoms available from Union Carbide Chem. & Plastics Co.. Industrial Chemicals Division, Danbury Connecticut.

Other suitable nonionic surfactants for the primary surfactant include TERGITOL® 15-S-40 (18.0), an ethoxylated alcohol available from Union Carbide Corporation; HETSORB® O-20 (15.0), a sorbitan laureate available from Heterene Chemical; TWEEN® 80 (15.0), a polyoxyethylene sorbitan monooleate available from ICI Americas Inc. of Wilmington Delaware; APG 325 CS® Glycoside (13.0), a 9 to 11 carbon alkyl polysaccharide ether having available from Henkel Corporation Ambler, Pennsylvania: BRIJ® 35L (16.9), which is polyoxyethylene lauryl ether produced by ICI Surfactant and TRITON® X-100 (13.5), TRITON® X-305 (17.3), and TRITON® X-705 (17.9), all of which are ethoxylated octylphenols produced by Union Carbide Corporation. BRIJ® 35L is preferred.

The cosurfactant must have an HLB less than 11. Examples of some suitable cosurfactants and their HLB values include: ALDO® MS (3.8-3.9), which is glycerol monostearate, and LONZEST® GMO (3.0), which is an ethoxylated fatty ester, both of which are produced by Lonza Inc., Fairlawn, New Jersey; S-MAZ® 60K (4.7), which is a sorbitan monostearate available from PPG Industries. Gurnee, Illinois; ARLACEL® 60 (4.7), which is a sorbitan stearate available from ICI Americas Inc., Wilmington, Delaware: oleates such as sorbitan monooleate (4.3), sorbitan trioleate (1.8), polyoxyethylene sorbitan monooleate (10.0); ALDO PGHMS® (3.0), which is propylene glycol monostearate available from Lonza Inc., Fairlawn, New Jersey; MAPEG® EGMS (2.9), which is ethylene glycol monostearate available from PPG/ Mazer Gurnee, Illinois; HODAG® DGS (4.7), which is diethylene glycol monostearate; ETHOX® SAM-2 (4.9), which is a polyoxyethylene stearyl amine available from Ethox Chemicals Inc., Greenville, South Carolina; MACOL® SA-2 (4.9), which is a polyoxyethylene stearyl ester available from PPG/ MAZER, Gurnee. Illinois; and polyoxyethylene ethers such as BRIJ® 72 (4.9), which is a polyoxyethylene lauryl ether and BRIJ® 52 (4.9), which is a polyoxyethylene cetyl ether, both of which are available from ICI Americas Inc.; SPAN® 20 (8.6), which is a sorbitan monolaurate available from ICI Surfactants; and CALGENE® GML (3.0), which is glycerol monolaurate available from Calgene Chemical, Inc.

Sorbitan fatty acid esters having HLB values in the range of 4.3 to 8,6 and polyoxyethylene sorbitan fatty acid esters having HLB values in the range of 9.6 to 10 are preferred nonionic surfactants. The preferred sorbitan fatty acid esters having HLB values in the range of 4.3 to 8.6 are available commercially under the tradename SPAN®, produced by ICI Americas. SPAN® 20, a sorbitan monolaurate, has HLB of 8.6, SPAN® 40 has HLB of 6.7, SPAN® 60, a sorbitan monostearate, has HLB 4.7, and SPAN® 80 has HLB of 4.3. SPAN® 20 is particularly preferred. Polyoxyethylene sorbitan fatty acid esters having HLB values in the range of 9.6 to 10.0 are commercially available under the tradename TWEEN®, produced by ICI Americas. Particularly preferred are TWEEN® 61, which has HLB of 9.6; and TWEEN® 81 which has HLB of 10.0.

The concentration of cosurfactant in the emulsion is 1.5 to 15, preferably 4 to 15, molecules per 100 square Angstroms of surface area of the silane particles. Higher amounts of cosurfactant are unnecessary and may lead to emulsion instability. Emulsion particle sizes cited are "intensity" weighted diameters as measured by dynamic light scattering (photon correlation spectroscopy). A NICOMP® Particle Sizer instrument was used.

The balance, up to 100%, of the aqueous silane emulsion comprises water and any optional components. Typically, the amount of water in the emulsion is 30 to 99 weight percent. The aqueous silane emulsion may further comprise one or more of the following optional components: (D) a buffer, (E) a biocide, (F) a thickener, (G) a fragrance, (H) a colorant, (I) a foaming agent, (J) an anti-foaming agent, and (K) a rust inhibitor.

Component (D) is an optional buffer used to maintain the pH of the aqueous silane emulsion in a desired range. Buffers are typically organic and inorganic acids and bases, including salts thereof. The amount of buffer added to the emulsion is typically 0.01 to 5 wt%. Suitable buffers are disclosed in U.S. Patent No. 4,877,654.

When the emulsion will be used in water repellence applications, the buffer is preferably selected from the group consisting of sodium bicarbonate, sodium benzoate disodium hydrogen phosphate, and a mixture of ammonium hydroxide and acetic acid. A buffer is preferably added to the emulsion when a biocide is present, or when pH of the emulsion is outside the range of 6 to 9.

Component (E) is an optional biocide typically added in an amount of 0.1 to 5 wt% of the emulsion. Biocides are known in the art and are commercially available. For example, 6-acetoxy-2,4-dimethyl-m-dioxane (GIV-GARD DXN®) sold by Guvaudan Corp, is suitable for this invention. Suitable biocides are disclosed in U.S. Patent No. 4,877,654.

Component (F) is an optional thickener that moderately increases the viscosity of the aqueous phase. Component (F) may be used to prevent creaming of the larger particle size emulsions in this range. The thickener must not affect the stability and particle size of the emulsion. Suitable thickeners are exemplified by water soluble polymers such as polyacrylic acid and polyacrylic acid salts, alginic acid salt, alginic acid ester, polyvinyl alcohol, polyether, casein, mannan, starch, chitosan, carboxymethylcellulose, and methoxymethyl cellulose. U.S. Patent 5,746,810. describes suitable thickeners. Thickeners are typically added in an amount of 0.1 to 1 wt% of the emutsion,

Component (G) is an optional fragrance. Component (H) is an optional colorant. The colorant can be water based, or it can be an oil-soluble dye. Component (I) is an optional foaming agent. Component (J) is an optional anti-foaming agent. Component (K) is an optional rust inhibitor. Component (K) is, for example, sodium benzoate.

The emulsion of this invention can be used in a wide variety of applications, including water repellence applications. This invention further relates to a method for rendering substrates water repellent. The method comprises impregnating the substrate with the aqueous alkoxysilane emulsion, and hydrolyzing and condensing the alkoxysilane. The substrate can be wood, but is preferably masonry. 'Masonry' means any porous inorganic substrate, such as building materials. Masonry includes structural ceramics, cements, insulation products, stone, and concrete. Suitable substrates are disclosed in U.S. Patent 4,877,654.

The method for impregnating the substrate with the aqueous alkoxysilane emulsion is not critical. For example, the emulsion can be applied to a surface of the substrate by brush coaling, roller coating, or spraying. Alternatively, the aqueous alkoxysilane emulsion can be mixed with a composition, such as uncured concrete, and thereafter the composition can be cured to form a substrate having water repellency. The amount of emulsion impregnated in the substrate depends on the porosity and surface conditions of the substrate but is typically in the range of 0.05 to 2.0 Kg/sq.m.

This invention further relates to a method for minimizing particle size increase with time of an emulsion comprising:

I) emulsifying a composition comprising

A) a continuous phase comprising water;
B) a discontinuous phase comprising at least 1 nonpolar alkoxysilane having at least one nonpolar organofunctional group bonded to the silicon atom, wherein the discontinuous phase forms particles dispersed in the water; and
C) an emulsifier system consisting essentially of

(i) a primary surfactant, wherein the primary surfactant is a nonionic emulsifier having an HLB greater than 13, and wherein the primary surfactant is present in the emulsion at a concentration of 0.5 to 3 molecules per 100 square Angstrom of surface area of the particles and

(ii) a cosurfactant, wherein the cosurfactant is a nonionic emulsifier having an HLB less than 11, and wherein the cosurfactant is present in the emulsion at a concentration sufficient to provide 1.5 to 15 molecules per 100 square Angstroms of surface area of the particles;

II) forming an adsorbed inner layer consisting essentially of the cosurfactant between the discontinuous phase and an outer layer consisting essentially of a combination of the primary surfactant and the cosurfactant, wherein the outer layer contacts the aqueous phase; and wherein the nonpolar alkoxysilane contains an impurity in an amount of 2.50 weight percent or less.

The emulsion can be made with a desired particle size of the discontinuous phase (i.e., less than 0.5 micrometers) to get the correct range of surfactant coverage on the particles. Particle size can be varied by changing shearing conditions such as sonolation pressure during emulsification. For example, if the particle size and surface coverage is too large, increasing shear or increasing sonolation pressure can be performed to decrease particle size. If particle surface coverage is too low, i.e., because particle size is too small, the shearing intensity can be decreased, additional cosurfactant can be added, or both, as needed. One skilled in the art would know how to adjust particle size by changing shearing conditions.

## EXAMPLES

These examples are intended to illustrate the invention to those skilled in the art and should not be interpreted as limiting the scope of the invention set forth in the claims. All percentages in these Examples are weight percentages, unless otherwise indicated. For purposes of these Examples, 'n-Otes' means n-octyltriethoxysilane and 'i-Btes' means isobutyltriethoxysilane. The nonionic surfactants used are shown by tradename in these Examples. BRIJ® 35L is a polyoxyethylene laurel ether with HLB of 16.9. TRITON® X-100 is an ethoxylated octylphenol with HLB 13.5. TRITON® X-305 is an ethoxylated octylphenol with HLB of 17.3. SPAN® 20 is a sorbitan monolaurate with HLB of 8.6. LONZEST® GMO is an ethoxylated fatty ester with HLB of 3.0.

The equation used to calculate gamma ($\Gamma$), which is number of surfactant molecules per 100 square Angstroms of particle surface area, is shown below:

$$\Gamma = \% \, S \times D \div (9.96 \times 10^{-3} \times M \times \% \, silane),$$

where S is the weight percent of the emulsifier in the emulsion, D is the initial particle size (diameter) of the silane particles in nanometers, and M is the molecular weight of the emulsifier.

### Reference Example 1

An emulsion of a silane was prepared by mixing 12 parts water with the primary surfactant until the primary surfactant was completely mixed with the water. Then 40 parts of the silane were mixed with the cosurfactant and added to the above water mixture. The resulting mixture was stirred at 2000 RPM with a 1.5 inch diameter Cowls blade for 30 minutes. After 30 minutes an additional 58.3 parts water was added and the resulting mixture was processed through a 2 stage homogenizer at 7500/1500 psi. After homogenizing the mixture, 0.001 parts of sodium bicarbonate was added to the mixture to maintain a pH of approximately 7.0.

The initial particle size of the resulting emulsion was measured by a NICOMP® particle size analyzer. Particle size is reported in nanometers, unless otherwise indicated below. Based on the amount of primary surfactant added and the initial particle size, a coverage of primary surfactant per 100 square Angstroms of particle size was generated according to the formula above. Similarly, based on the amount of cosurfactant and the initial particle size, a coverage of cosurfactant per 100 square Angstroms of particle size was generated according to the forumula above.

The particle size of the emulsion was measured after storage at room temperature. When a clear water layer was visually observed on the bottom of the emulsion. the emulsion was deemed to have failed stability.

Tables 1 - 3 show the primary surfactant and the amount used. the cosurfactant and the amount used, the silane used, and the amount of water used. Table 4 shows the coverage of primary surfactant and cosurfactant and the particle size measured over time for each sample, until the sample failed stability.

### Comparative Example 1

An emulsion of N-octyltriethoxysilane was prepared by the method of Reference Example 1. The surfactants used were the same as used in the examples of U.S. Patent 4,877,654 to Wilson et al. For the purposes of this experiment, TRITON® X-305 (HLB = 17.3) was presumed to be the primary surfactant, and TRITON® X-100 (HLB = 13.5) was presumed to be the cosurfactant. The amount of TRITON® X-305 was 0.48 parts by weight. The amount of TRITON® X-100 was 1.12 parts by weight. The resulting emulsion had an initial particle size of 402 nm. Based on the amount of TRITON® X-100 added and the initial particle size a coverage of 1.8 molecules of co-surfactant per 100 square Angstroms of particle size was generated. The emulsion increased in particle size until a particle size of 1232 nm was measured after 21 days of storage at room temperature. After 21 days a clear water layer was observed on the bottom of the emulsion and the emulsion was determined to have failed stability. The formulation for Comparative Sample 1 is in Table 1.

Comparative Example 1 shows that unstable emulsions are produced when there is insufficient coverage of cosurfactant on the particles and the cosurfactant has an HLB value greater than 11.

## Comparative Example 2

The same procedure used in Reference Example 1 was used to prepare an emulsion, except that isobutyltriethoxysilane was used instead of N-octyltriethoxysilane. TRITON® X-305 was presumed to be the primary surfactant, and TRITON® X-100 was presumed to be the cosurfactant. The amount of TRITON® X-305 was 0.48 parts by weight. The amount of TRITON® X-100 was 1.12 parts by weight. The resulting emulsion had an initial particle size of 924 nm. Within 24 hrs, the emulsion particle size increased to 1918 nm. After 24 hrs. a clear water layer on the bottom of the emulsion was observed, and the emulsion was deemed to have failed stability. The formulation for Comparative Sample 2 is in Table 1.

Comparative Example 2 shows that unstable emulsions are produced when there is insufficient coverage of cosurfactant on the particles and the cosurfactant has an HLB value greater than 11.

## Comparative Example 3

Comparative Sample 3 was prepared by the same method as in Reference Example 1, except that the primary surfactant was 1.4 parts BRIJ® 35L. The cosurfactant was 0.59 parts SPAN® 20. The emulsion had an initial particle size of 335nm. Based on the particle size and the amount of SPAN® 20 used, a coverage of 1.4 molecules of co-surfactant per 100 square Angstroms of particle size was generated.

After 14 days the emulsion had a particle size of 1247 nm, and a clear water layer was observed indicating the emulsion had failed stability. The formulation of Comparative Sample 3 is in Table 2.

## Comparative Example 4

Comparative Sample 4 was prepared by the same procedure as in Comparative Example 3, except that only 0.25 parts SPAN® 20 was added. The resulting emulsion had an initial particle size of 342nm. Based on the particle size and amount of SPAN® 20 used a coverage of 0.62 molecules of co-surfactant per 100 square Angstroms of particle size was generated.

After 14 days at room temperature the emulsion had a particle size of 1619 nm. A clear water layer was observed on the bottom indicating the emulsion had failed stability. The formulation of Comparative Sample 4 is in Table 2.

Comparative Examples 3 and 4 show that when the coverage of cosurfactant on the particle is insufficient, the emulsions fail stability after several weeks.

## Comparative Example 5

Comparative Sample 5 was prepared by the procedure of Comparative Example 1, except that the n-octyltriethoxysilane contained 0.63 weight % of the dimer thereof as an impurity. The resulting emulsion had an initial particle size of 396 nm.

After 14 days at room temperature, the particle size was 428 nm. No separation had occurred. The formulation of Comparative Sample 5 is in Table 5, and the particle size results are in Table 6.

## Comparative Example 6

Comparative Sample 6 was prepared by the procedure of Comparative Example 1, except that the n-octyltriethoxysilane contained 2.50 weight % of the dimer thereof as an impurity.

After 14 days at room temperature, the particle size was 330 nm. No separation had occurred. The formulation of Comparative Sample 6 is in Table 5, and the particle size results are in Table 6.

Comparative Example 1, the formulation and results of which are included for comparison in Tables 5 and 6, respectively, shows that when a high purity alkoxysilane (e.g., containing 0.1 wt% or less of impurities) is used without the emulsifier system of this invention, the emulsion does not have constant particle size. Comparative Examples 1, 5, and 6 show the effect of purity of the alkoxysilane on stability and particle size. In Comparative Example 1, the n-octyltriethoxysilane contained less than 0.1 weight % of impurity, and the emulsion was unstable. Particle size also increased significantly with time. Comparative Examples 1, 5, and 6 show that as impurity content of the silane increases, constancy of particle size of the emulsion also increases.

Example 1

Sample 1 was prepared by the same procedure as in Comparative Example 3, except that 1.0 parts SPAN® 20 was added. The emulsion had an initial particle size of 392 nm. Based on the initial particle size and the amount of SPAN® 20 used a coverage of 2.8 molecules of co-surfactant per 100 square Angstroms of particle size was generated.
After 63 days at room temperature the average particle size is 437 nm. No separation has occurred. The formulation for Sample 1 is in Table 2.
Example 1 shows that the emulsifier system of this invention can be used to produce stable emulsions with constant particle size.

Example 2

Sample 2 was prepared by the same procedure as in Comparative Example 3, except 2.5 parts SPAN® 20 was added. The resulting emulsion had an initial particle size of 319 nm. Based on the initial particle size and the amount of SPAN® 20 used a coverage of 5.8 molecules per 100 Angstrom of particle size was generated.
After 63 days at room temperature particle size is 324 nm. No separation has occurred. The formulation for Sample 2 is in Table 2.
Example 2 shows that using the emulsifier system of this invention yields emulsions that have particle size that does not increase by more than 10% when stored at about room temperature for 14 days. Furthermore, Examples 1 and 2 demonstrate that as the amount of co-surfactant increases, rate of particle size change decreases.
The results of Example 2 have been included in Table 6 for comparison. Example 2 and Comparative Example 6 show that the emulsifier system of this invention produces an emulsion with stability and constant particle size comparable to emulsions of alkoxysilanes having impurity contents higher than those of alkoxysilanes suitable for use in this invention. Comparative Examples 1 and 6 and Example 2 show that when a high purity silane is used, the emulsifier system of this invention must be used to produce a stable emulsion with constant particle size.

Example 3

Sample 3 was prepared by the procedure of Reference Example 1. The silane was n-octyltriethoxysilane. The primary surfactant was 1.4 parts BRIJ® 35L. The cosurfactant was 2.0 parts LONZEST® GMO. The resulting emulsion had an initial particle size of 276 nm.
After 34 days at room temperature the particle size is 279 nm. No separation has 7occurred. The formulation of Sample 3 is in Table 3.
Example 3 shows that using the emulsifier system of this invention yields emulsions that have particle size that does not increase by more than 10% when stored at about room temperature for 14 days. Example 3 also demonstrates that different cosurfactants can be used to produce a stable emulsion with constant particle size.

| Table 1 | | Comparative Examples | |
|---|---|---|---|
| | HLB Value | Comparative Sample 1 | Comparative Sample 2 |
| Silane "Primary" Surfactant | 17.3 | n-Otes 40.00%<br>TRITON® X-305 0.48% | i-Btes 40.00%<br>TRITON® X-305 0.48% |
| "Co-Surfactant" | 13.5 | TRITON® X-100 1.12% | TRITON® X-100 1.12% |
| Water | | 58.40% | 58.40% |

| Table 2 | | Examples: Varying Amounts of Cosurfactant | | | |
|---|---|---|---|---|---|
| | HLB Value | Comparative Sample 3 | Comparative Sample 4 | Sample 1 | Sample 2 |
| Silane Primary Surfactant | 16.9 | n-Otes 40.00%<br>BRIJ® 35L 1.40% | n-Otes 40.00%<br>BRIJ® 35L 1.40% | n-Otes 40.00%<br>BRIJ® 35L 1.40% | n-Otes 40.00%<br>BRIJ® 35L 1.40% |
| Co-surfactant | 8.6 | SPAN® 20 0.59% | SPAN® 20 0.25% | SPAN® 20 1.00% | SPAN® 20 2.50% |
| Water | | 58.01% | 58.35% | 57.60% | 56.10% |

| Table 3 | | Example: Different Cosurfactant | |
|---|---|---|---|
| | HLB Value | Sample 3 | |
| Silane Primary Surfactant | 16.9 | n-Otes 40.00%<br>BRIJ® 35L 1.40% | |
| Co-surfactant | 3.0 | LONZEST ® GMO 2.00% | |
| Water | | 56.60% | |

EP 1 150 933 B1

| Table 4 | Particle Size & Stability | | | | | | | | | | | | | |
|---|---|---|---|---|---|---|---|---|---|---|---|---|---|---|
| | $\Gamma$ Primary | $\Gamma$ Cosur-factant | Initial Particle Size | 24 hr Particle Size | 3 day Particle Size | 7 day Particle Size | 14 day Particle Size | 21 Day Particle Size | 28 Day Particle Size | 35 Day Particle Size | 42 Day Particle Size | 49 Day Particle Size | 56 Day Particle Size | 63 Day Particle Size |
| Comparative Sample 1 | 0.32 | 1.8 | 402 | 360 | 517 | 559 | 785.6 | 1232 | Failed | | | | | |
| Comparative Sample 2 | 0.73 | 4.2 | 924 | 1918 | 3031 | failed | | | | | | | | |
| Comparative Sample 3 | 0.71 | 1.4 | 335 | 330 | 357 | 379 | 1247 | failed | | | | | | |
| Comparative Sample 4 | 0.72 | 0.62 | 342 | 403 | 562 | 658 | 1619 | failed | | | | | | |
| Sample 1 | 0.83 | 2.8 | 392 | 386 | 402 | 424 | 435 | 447 | | 438 (36D) | 421.2 | 420 | 468 (60D) | 437 |
| Sample 2 | 1.5 | 5.8 | 319 | 316 | 329 | 311 | 331 | 327 | 328 (30D) | 322 | 313.8 | 333 | 321 | 324 |
| Sample 3 | 0.58 | 3.9 | 276 | 277.6 | 271.7 | 266.7 | 274.7 | 252 | 271 (27D) | 279 (34D) | | | | |

'NR' means not recorded.

A number in parentheses ( ) indicates the day on which the sample was tested, when it differs from the day at the first row of Table 4.

| Table 5 | | Examples: Varying Amounts of Impurity | | | | | |
|---|---|---|---|---|---|---|---|
| | HLB Value | Comparative Sample 1 | | Comparative Sample 5 | | Comparative Sample 6 | |
| Silane Impurity Content | | n-Otes | 40.00% | n-Otes | 39.37% | n-Otes | 37.50% |
| | | Dimer | <0.1% | Dimer | 0.63% | Dimer | 2.50% |
| "Primary Surfactant" | 17.3 | TRITON® X-305 | 0.48% | TRITON® X-305 | 0.48% | TRITON® X-305 | 0.48% |
| "Co-Surfactant" | 13.5 | TRITON® X-100 | 1.12% | TRITON® X-100 | 1.12% | TRITON® X-100 | 1.12% |
| Water | | | 58.40% | | 58.40% | | 58.40% |

| Table 6 | Particle Size & Stability | | | | |
|---|---|---|---|---|---|
| | Initial Particle Size | 6 day Particle Size | 14 day Particle Size | 20 day Particle Size | 84 day Particle Size |
| Comparative Sample 1 | 402 | 559 (7D) | 785.6 | 1232 (21D) | Failed |
| Comparative Sample 5 | 396 | 393 | 428 | 588 | Failed (28D) |
| Comparative Sample 6 | 318 | 313 | 330 | 341 | 314 |
| Sample 2 | 319 | 311 (7D) | 331 | 327 (21D) | 324 (63D) |

A number in parentheses ( ) indicates the day on which the sample was tested, when it differs from the day at the first row of Table 6.

**Claims**

1. An aqueous emulsion comprising:

    A) a continuous phase comprising water;
    B) a discontinuous phase comprising at least 1 nonpolar alkoxysilane having at least one nonpolar organofunctional group bonded to the silicon atom, wherein the discontinuous phase forms particles dispersed in the continuous phase; and
    C) an emulsifier system consisting essentially of

        (i) a primary surfactant, wherein the primary surfactant is a nonionic emulsifier having an HLB greater than 13, and wherein the primary surfactant is present in the emulsion at a concentration of 0.5 to 3 molecules per 100 square Angstrom of surface area of the particles;
        (ii) a cosurfactant, wherein the cosurfactant is a nonionic emulsifier having an HLB less than 11, and wherein the cosurfactant is present in the emulsion at a concentration sufficient to provide 1.5 to 15 molecules per 100 square Angstroms of surface area of the particles; and wherein the nonpolar alkoxysilane contains an impurity in an amount of 2.50 weight percent or less.

2. The emulsion of Claim 1 wherein the nonpolar alkoxysilane has general formula $R_nSiR'_{4-n}$, wherein each R is independently selected from the group consisting of alkyl, halogenated alkyl, aryl, and substituted aryl groups; R' is an alkoxy group of 1 to 6 carbon atoms; and n is 1 or 2.

3. The emulsion of Claim 1 or 2 wherein the concentration of the cosurfactant is sufficient to provide 4 to 15 molecules of cosurfactant per 100 square Angstroms of surface area of the particles.

4. The emulsion of any of Claims 1 to 3, wherein the particles have an average diameter of less than 10 micrometers.

5. A method for minimizing particle size increase with time of an emulsion comprising:

    I) emulsifying a composition comprising

        A) a continuous phase comprising water;
        B) a discontinuous phase comprising at least 1 nonpolar alkoxysilane having at least one nonpolar organofunctional group bonded to the silicon atom, wherein the discontinuous phase forms particles dispersed in the water; and
        C) an emulsifier system consisting essentially of

            (i) a primary surfactant, wherein the primary surfactant is a nonionic emulsifier having an HLB greater than 13, and wherein the primary surfactant is present in the emulsion at a concentration of 0.5 to 3 molecules per 100 square Angstrom of surface area of the particles and
            (ii) a cosurfactant, wherein the cosurfactant is a nonionic emulsifier having an HLB less than 11, and wherein the cosurfactant is present in the emulsion at a concentration sufficient to provide 1.5 to 15 molecules per 100 square Angstroms of surface area of the particles;

        II) forming an adsorbed inner layer consisting essentially of the cosurfactant between the discontinuous phase and an outer layer consisting essentially of a combination of the primary surfactant and the cosurfactant, wherein the outer layer contacts the aqueous phase; and wherein the nonpolar alkoxysilane contains an impurity in an amount of 2.50 weight percent or less.

6. The method of Claim 5 wherein the concentration of cosurfactant is 4 to 15 molecules per 100 square Angstroms of surface area of the silane particles, thereby minimizing size increase of the particles such that the particles do not increase in size by more than 10% after the emulsion is stored at about 25°C for at least 14 days.

7. A water repellent composition for masonry, wherein the composition comprises an aqueous silane emulsion comprising:

    A) a continuous phase comprising water;
    B) a discontinuous phase comprising at least 1 nonpolar alkylalkoxysilane having at least one nonpolar organofunctional group bonded to the silicon atom having a molecular weight less than 1,000; and wherein the discontinuous phase forms particles dispersed in the continuous phase; and
C) an emulsifier system consisting essentially of

(i) a primary surfactant, wherein the primary surfactant is a nonionic emulsifier having an HLB greater than 13, and wherein the primary surfactant is present in the emulsion at a concentration of 0.5 to 3 molecules per 100 square Angstrom of surface area of the particles and
(ii) a cosurfactant, wherein the cosurfactant is a nonionic emulsifier having an HLB less than 11, and wherein the cosurfactant is present in the emulsion at a concentration sufficient to provide 1.5 to 15 molecules per 100 square Angstroms of surface area of the particles;

D) a buffer; and wherein the nonpolar alkoxysilane contains an impurity in an amount of 2.50 weight percent or less.

8. The emulsion of Claim 7 wherein the alkylalkoxysilane has general formula $R_nSiR'_{4-n}$, where R is an alkyl group of 8 to 20 carbon atoms, R' is an alkoxy group of 1 to 6 carbon atoms, and n is 1 or 2.

9. A method for rendering a masonry substrate water repellent comprising:

(I) impregnating the masonry substrate with an emulsion, wherein the emulsion comprises

A) a continuous phase comprising water;
B) a discontinuous phase comprising at least 1 nonpolar alkylalkoxysilane having at least one nonpolar organofunctional group bonded to the silicon atom having a molecular weight less than 1,000; wherein the discontinuous phase represents 5 to 65 wt% of the emulsion, and wherein the discontinuous phase forms particles dispersed in the continuous phase; and
C) an emulsifier system consisting essentially of

(i) a primary surfactant, wherein the primary surfactant is a nonionic emulsifier having an HLB greater than 13, and wherein the primary surfactant is present in the emulsion at a concentration of 0.5 to 3 molecules per 100 square Angstrom of surface area of the particles and
(ii) a cosurfactant, wherein the cosurfactant is a nonionic emulsifier having an HLB less than 11, and wherein the cosurfactant is present in the emulsion at a concentration sufficient to provide 1.5 to 15 molecules per 100 square Angstroms of surface area of the particles; and

D) a buffer;

(II) hydrolyzing and condensing the alkoxysilane; and wherein the nonpolar alkoxysilane contains an impurity in an amount of 2.50 weight percent or less.

**Patentansprüche**

1. Wässrige Emulsion, enthaltend:

A) eine kontinuierliche Phase, die Wasser enthält;
B) eine diskontinuierliche Phase, die mindestens 1 unpolares Alkoxysilan enthält, das mindestens eine unpolare organofunktionelle Gruppe, die an das Siliciumatom gebunden ist, aufweist, wobei die diskontinuierliche Phase Teilchen bildet, die in der kontinuierlichen Phase dispergiert sind; und
C) ein Emulgatorsystem, das im Wesentlichen aus

(i) einer ersten oberflächenaktiven Substanz, wobei die erste oberflächenaktive Substanz ein nichtionischer Emulgator mit einem HLB von größer als 13 ist und wobei die erste oberflächenaktive Substanz in der Emulsion in einer Konzentration von 0,5 bis 3 Molekülen pro 100 $Å^2$ Oberfläche der Teilchen vorhanden ist;
(ii) einer oberflächenaktiven Cosubstanz, wobei die oberflächenaktive Cosubstanz ein nichtionischer Emulgator mit einem HLB von kleiner als 11 ist und wobei die oberflächenaktive Cosubstanz in der Emulsion in einer Konzentration vorhanden ist, die ausreichend ist, um 1,5 bis 15 Moleküle pro 100 $Å^2$ Ober-

fläche der Teilchen bereitzustellen,

besteht, und worin das unpolare Alkoxysilan eine Verunreinigung in einer Menge von 2,50 Gew.-% oder weniger enthält.

2. Emulsion nach Anspruch 1, worin das unpolare Alkoxysilan die allgemeine Formel $R_nSiR'_{4-n}$ aufweist, worin jedes R unabhängig voneinander ausgewählt ist aus der Gruppe bestehend aus Alkyl-, halogenierten Alkyl-, Aryl- und substituierten Arylgruppen; R' eine Alkoxygruppe mit 1 bis 6 Kohlenstoffatomen ist und n gleich 1 oder 2 ist.

3. Emulsion nach Anspruch 1 oder 2, worin die Konzentration der oberflächenaktiven Cosubstanz ausreichend ist, um 4 bis 15 Moleküle der oberflächenaktiven Cosubstanz pro 100 $Å^2$ Oberfläche der Teilchen bereitzustellen.

4. Emulsion nach einem der Ansprüche 1 bis 3, worin die Teilchen einen mittleren Durchmesser von weniger als 10 μm aufweisen.

5. Verfahren zur Minimierung der Zunahme der Teilchengröße einer Emulsion mit der Zeit, umfassend:

I) Emulgieren einer Zusammensetzung, enthaltend:

A) eine kontinuierliche Phase, die Wasser enthält;
B) eine diskontinuierliche Phase, die mindestens 1 unpolares Alkoxysilan enthält, das mindestens eine unpolare organofunktionelle Gruppe, die an das Siliciumatom gebunden ist, aufweist, wobei die diskontinuierliche Phase Teilchen bildet, die in dem Wasser dispergiert sind, und
C) ein Emulgatorsystem, das im Wesentlichen aus

(i) einer ersten oberflächenaktiven Substanz, wobei die erste oberflächenaktive Substanz ein nichtionischer Emulgator mit einem HLB von größer als 13 ist und wobei die erste oberflächenaktive Substanz in der Emulsion in einer Konzentration von 0,5 bis 3 Molekülen pro 100 $Å^2$ Oberfläche der Teilchen vorhanden ist, und
(ii) einer oberflächenaktiven Cosubstanz, wobei die oberflächenaktive Cosubstanz ein nichtionischer Emulgator mit einem HLB von kleiner als 11 ist und wobei die oberflächenaktive Cosubstanz in der Emulsion in einer Konzentration vorhanden ist, die ausreichend ist, um 1,5 bis 15 Moleküle pro 100 $Å^2$ Oberfläche der Teilchen bereitzustellen, besteht;

II) Bilden einer absorbierten inneren Schicht, die im Wesentlichen aus der oberflächenaktiven Cosubstanz besteht, zwischen der diskontinuierlichen Phase und einer äußeren Schicht, die im Wesentlichen aus einer Kombination der ersten oberflächenaktiven Substanz und der oberflächenaktiven Cosubstanz besteht, worin die äußere Schicht die wässrige Phase berührt und worin das unpolare Alkoxysilan eine Verunreinigung in einer Menge von 2,50 Gew.-% oder weniger enthält.

6. Verfahren nach Anspruch 5, worin die Konzentration der oberflächenaktiven Cosubstanz 4 bis 15 Moleküle pro 100 $Å^2$ Oberfläche der Silanteilchen beträgt, wobei die Zunahme der Teilchengröße minimiert wird, so dass die Teilchen in der Größe nicht mehr als 10% zunehmen, nachdem die Emulsion für mindestens 14 Tage bei etwa 25°C gelagert wird.

7. Wasserabstoßende Zusammensetzung für Mauerwerk, wobei die Zusammensetzung eine wässrige Silanemulsion, enthaltend:

A) eine kontinuierliche Phase, die Wasser enthält;
B) eine diskontinuierliche Phase, die mindestens 1 unpolares Alkylalkoxysilan mit einem Molekulargewicht von weniger als 1000 enthält, das mindestens eine unpolare organofunktionelle Gruppe, die an das Siliciumatom gebunden ist, aufweist, und wobei die diskontinuierliche Phase Teilchen bildet, die in der kontinuierlichen Phase dispergiert sind; und
C) ein Emulgatorsystem, das im Wesentlichen aus

(i) einer ersten oberflächenaktiven Substanz, wobei die erste oberflächenaktive Substanz ein nichtionischer Emulgator mit einem HLB von größer als 13 ist und wobei die erste oberflächenaktive Substanz in der Emulsion in einer Konzentration von 0,5 bis 3 Moleküle pro 100 $Å^2$ Oberfläche der Teilchen vorhanden ist;

(ii) einer oberflächenaktiven Cosubstanz, worin die oberflächenaktive Cosubstanz ein nichtionischer Emulgator mit einem HLB von kleiner als 11 ist und worin die oberflächenaktive Cosubstanz in der Emulsion in einer Konzentration vorhanden ist, die ausreichend ist, um 1,5 bis 15 Moleküle pro 100 $\text{Å}^2$ Oberfläche der Teilchen bereitzustellen, besteht;

D) einen Puffer,

enthält, und worin das unpolare Alkoxysilan eine Verunreinigung in einer Menge von 2,50 Gew.-% oder weniger enthält.

8. Emulsion nach Anspruch 7, worin das Alkylalkoxysilan die allgemeine Formel $R_nSiR'_{4-n}$ aufweist, worin R eine Alkylgruppe mit 8 bis 20 Kohlenstoffatomen ist, R' eine Alkoxygruppe mit 1 bis 6 Kohlenstoffatomen ist und n gleich 1 oder 2 ist.

9. Verfahren, um ein Mauerwerksubstrat wasserabstoßend zu machen, umfassend:

(I) Imprägnieren des Mauerwerksubstrats mit einer Emulsion, worin die Emulsion enthält:

A) eine kontinuierliche Phase, die Wasser enthält;
B) eine diskontinuierliche Phase, die mindestens 1 unpolares Alkylalkoxysilan mit einem Molekulargewicht von weniger als 1000 enthält, das mindestens eine unpolare organofunktionelle Gruppe, die an das Siliciumatom gebunden ist, aufweist, wobei die diskontinuierliche Phase 5 bis 65 Gew.-% der Emulsion darstellt und wobei die diskontinuierliche Phase Teilchen bildet, die in der kontinuierlichen Phase dispergiert sind, und
C) ein Emulgatorsystem, das im Wesentlichen aus

(i) einer ersten oberflächenaktiven Substanz, wobei die erste oberflächenaktive Substanz ein nichtionischer Emulgator mit einem HLB von größer als 13 ist und wobei die erste oberflächenaktive Substanz in der Emulsion in einer Konzentration von 0,5 bis 3 Molekülen pro 100 $\text{Å}^2$ Oberfläche der Teilchen vorhanden ist, und
(ii) einer oberflächenaktiven Cosubstanz, wobei die oberflächenaktive Cosubstanz ein nichtionischer Emulgator mit einem HLB von kleiner als 11 ist und wobei die oberflächenaktive Cosubstanz in der Emulsion in einer Konzentration vorhanden ist, die ausreichend ist, um 1,5 bis 15 Moleküle pro 100 $\text{Å}^2$ Oberfläche der Teilchen bereitzustellen, besteht, und

D) einen Puffer;

(II) Hydrolysieren und Kondensieren des Alkoxysilans, und worin das unpolare Alkoxysilan eine Verunreinigung in einer Menge von 2,50 Gew-% oder weniger enthält.

## Revendications

1. Emulsion aqueuse comprenant :

A) une phase continue comprenant de l'eau;
B) une phase discontinue comprenant au moins un alcoxysilane non polaire comportant au moins un groupe organofonctionnel non polaire lié à l'atome de silicium, dans laquelle la phase discontinue forme des particules dispersées dans la phase continue, et
C) un système d'émulsifiants formé essentiellement

(i) d'un agent tensioactif primaire, dans lequel l'agent tensioactif primaire est un émulsifiant non ionique ayant un HLB supérieur à 13, et dans lequel l'agent tensioactif primaire est présent dans l'émulsion à une concentration de 0,5 à 3 molécules par 100 angströms au carré d'aire superficielle des particules;
(ii) d'un coagent tensioactif, dans lequel le coagent tensioactif est un émulsifiant non ionique ayant un HLB inférieur à 11, et dans lequel le coagent tensioactif est présent dans l'émulsion à une concentration suffisante pour obtenir 1,5 à 15 molécules par 100 angströms au carré d'aire superficielle des particules;

et dans laquelle l'alcoxysilane non polaire contient une impureté en une quantité de 2,50% en poids ou moins.

**2.** Emutsion suivant la revendication 1, dans laquelle l'alcoxysilane non polaire a la formule générale $R_nSiR'_{4-n}$, dans laquelle chaque R est choisi indépendamment dans le groupe comprenant les groupes alkyle, alkyle halogénés, aryle et aryle substitués, R' est un groupe alcoxy de 1 à 6 atomes de carbone, et n est égal à 1 ou 2.

**3.** Emulsion suivant l'une ou l'autre des revendications 1 et 2, dans laquelle la concentration du coagent tensioactif est suffisante pour obtenir 4 à 15 molécules de coagent tensioactif par 100 angströms au carré d'aire superficielle des particules.

**4.** Emulsion suivant l'une quelconque des revendications 1 à 3, dans laquelle les particules ont un diamètre moyen inférieur à 10 micromètres.

**5.** Procédé pour minimiser une augmentation de la taille des particules en fonction du temps d'une émulsion comprenant :

I) l'émulsification d'une composition comprenant :

A) une phase continue comprenant de l'eau;
B) une phase discontinue comprenant au moins un alcoxysilane non polaire comportant au moins un groupe organofonctionnel non polaire lié à l'atome de silicium, dans laquelle la phase discontinue forme des particules dispersées dans la phase continue, et
C) un système d'émulsifiants formé essentiellement

(i) d'un agent tensioactif primaire, dans lequel l'agent tensioactif primaire est un émulsifiant non ionique ayant un HLB supérieur à 13, et dans lequel l'agent tensioactif primaire est présent dans l'émulsion à une concentration de 0,5 à 3 molécules par 100 angströms au carré d'aire superficielle des particules;
(ii) d'un coagent tensioactif, dans lequel le coagent tensioactif est un émulsifiant non ionique ayant un HLB inférieur à 11, et dans lequel le coagent tensioactif est présent dans l'émulsion à une concentration suffisante pour obtenir 1,5 à 15 molécules par 100 angströms au carré d'aire superficielle des particules;

II) la formation d'une couche intérieure adsorbée formée essentiellement du coagent tensioactif entre la phase discontinue et une couche extérieure formée essentiellement d'une combinaison de l'agent tensioactif primaire et du coagent tensioactif, dans lequel la couche extérieure est au contact de la phase aqueuse; et dans lequel l'alcoxysilane non polaire contient une impureté en une quantité de 2,50% en poids ou moins.

**6.** Procédé suivant la revendication 5, dans lequel la concentration en coagent tensioactif est de 4 à 15 molécules par 100 angströms au carré d'aire superficielle des particules de silane, en minimisant ainsi une augmentation de taille des particules de telle sorte que les particules n'augmentent pas de taille de plus de 10% après que l'émulsion est conservée à environ 25°C pendant au moins 14 jours.

**7.** Composition hydrofuge pour la maçonnerie, dans laquelle la composition comprend une émulsion de silane aqueuse comprenant :

A) une phase continue comprenant de l'eau;
B) une phase discontinue comprenant au moins un alcoxysilane non polaire comportant au moins un groupe organofonctionnel non polaire lié à l'atome de silicium ayant un poids moléculaire inférieur à 1.000, et dans laquelle la phase discontinue forme des particules dispersées dans la phase continue, et
C) un système d'émulsifiants formé essentiellement

(i) d'un agent tensioactif primaire, dans lequel l'agent tensioactif primaire est un émulsifiant non ionique ayant un HLB supérieur à 13, et dans lequel l'agent tensioactif primaire est présent dans l'émulsion à une concentration de 0,5 à 3 molécules par 100 angströms au carré d'aire superficielle des particules;
(ii) d'un coagent tensioactif, dans lequel le coagent tensioactif est un émulsifiant non ionique ayant un HLB inférieur à 11, et dans lequel le coagent tensioactif est présent dans l'émulsion à une concentration suffisante pour obtenir 1,5 à 15 molécules par 100 angströms au carré d'aire superficielle des particules;

D) un tampon; et dans laquelle l'alcoxysilane non polaire contient une impureté en une quantité de 2,50% en poids ou moins.

8. Emulsion suivant la revendication 7, dans laquelle l'alcoxysilane a la formule générale $R_nSiR'_{4-n}$, dans laquelle R est un groupe alkyle de 8 à 20 atomes de carbone, R' est un groupe alcoxy de 1 à 6 atomes de carbone et n est égal à 1 ou 2.

9. Procédé pour rendre un substrat de maçonnerie hydrofuge comprenant :

(I) l'imprégnation du substrat de maçonnerie avec une émulsion, dans lequel l'émulsion comprend :

A) une phase continue comprenant de l'eau;
B) une phase discontinue comprenant au moins un alkylalcoxysilane non polaire comportant au moins un groupe organofonctionnel non polaire lié à l'atome de silicium ayant un poids moléculaire inférieur à 1000; dans lequel la phase discontinue représente 5 à 65% en poids de l'émulsion, et dans lequel la phase discontinue forme des particules dispersées dans la phase continue; et
C) un système d'émulsifiants formé essentiellement

(i) d'un agent tensioactif primaire, dans lequel l'agent tensioactif primaire est un émulsifiant non ionique ayant un HLB supérieur à 13, et dans lequel l'agent tensioactif primaire est présent dans l'émulsion à une concentration de 0,5 à 3 molécules par 100 angströms au carré d'aire superficielle des particules;
(ii) d'un coagent tensioactif, dans lequel le coagent tensioactif est un émulsifiant non ionique ayant un HLB inférieur à 11, et dans lequel le coagent tensioactif est présent dans l'émulsion à une concentration suffisante pour obtenir 1,5 à 15 molécules par 100 angströms au carré d'aire superficielle des particules; et

D) un tampon;

(II) l'hydrolyse et la condensation de l'alcoxysilane; et dans lequel l'alcoxysilane non polaire contient une impureté en une quantité de 2,50% en poids ou moins.